# EUROPÄISCHE PATENTSCHRIFT

(11) **EP 0 634 729 B1**
(45) Veröffentlichungstag und Bekanntmachung des Hinweises auf die Patenterteilung: **29.11.2000**
(21) Anmeldenummer: 94202005.8
(22) Anmeldetag: 12.07.1994
(51) Int. Cl.: G06K 7/08, G06K 7/10, G06K 7/00

(54) **Datenaustauschanordnung**
Device for date exchange
Dispositif d'échange de données

(30) Priorität: 14.07.1993 DE 4323530
(43) Veröffentlichungstag der Anmeldung: 18.01.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Tobergte, Dr. Wolfgang, D-20097 Hamburg (DE)
(74) Vertreter: Peters, Carl Heinrich, Dipl.-Ing.

(56) Entgegenhaltungen:
- DE-A- 2 407 497
- US-A- 4 384 288
- US-A- 4 656 472

## Beschreibung

Die Erfindung betrifft eine Datenaustauschanordnung mit einer festen Station und einem tragbaren Datenträger, die miteinander durch Mittel für eine drahtlose Verbindung zur Übertragung hochfrequenter Energie und Daten gekoppelt sind, wobei der Datenträger wenigstens eine elektrische Schaltung mit einer Speiseanordnung zum Erzeugen der Betriebsspannung der Schaltung aus der empfangenen hochfrequenten Energie oder aus einer Energiequelle enthält,

Eine derartige Datenaustauschanordnung ist bekannt aus der WO 92/08148. Bei dem darin beschriebenen System dient der Datenträger dazu, eine Person in einem Sicherheitsbereich zu überwachen. Dazu sendet der Datenträger periodisch sehr kurze kodierte Informationsblöcke aus, die den Datenträger identifizieren, und diese ausgesendeten Informationsblöcke werden von einer Antenne aufgenommen und in einer Empfangseinrichtung weiter verarbeitet. Außerdem sind an Eingängen des Sicherheitsbereichs Abfrageanordnungen vorgesehen, die ein hochfrequentes elektromagnetisches Feld aussenden, das außerdem Informationen überträgt. Wenn der Datenträger in die Nähe einer solchen Abfrageanordnung gelangt, wird durch die aufgenommene Energie aus dem hochfrequenten elektromagnetischen Feld die Schaltung des Datenträgers gespeist, und gleichzeitig wird eine in dem Datenträger enthaltene Batterie abgeschaltet, und zwar nur, solange die Energie des vom Datenträger aufgenommenen hochfrequenten Feldes genügend groß ist. Der Datenträger sendet dann seine Identifikation zur Abfrageanordnung zurück, die gegebenenfalls den Zugang zum Sicherheitsbereich freigibt.

Bei diesem bekannten System sendet die Abfrageanordnung ständig ein hochfrequentes Feld aus. Außerdem sind Abfrageanordnung und Antenne mit Empfangsanordnung völlig getrennte Einrichtungen. Insbesondere die Tatsache, daß die Abfrageanordnung ständig ein elektromagnetisches Feld ausstrahlen muß, wirft abgesehen von einer gewissen Umweltbelastung auch Probleme auf, wenn die in der Abfrageanordnung vorhandene Energiequelle begrenzte Kapazität hat, wie dies beispielsweise bei einem Kraftfahrzeug der Fall ist.

US-A-4 384 288 offenbart eine Datenaustauschanordnung mit einer testen Station und einem tragbaren Datenträger, die miteinander durch Mittel für eine drahtlose Verbindung zur Übertragung hochfrequenter Energie und Daten gekoppelt sind. Der Datenträger enthält wenigstens eine elektrische Schaltung mit einer Energiequelle und einer Speiseanordnung zum Erzeugen der Betriebsspannung der Schaltung aus der empfangenen hochfrequenten Energie zum Laden der Energiequelle. In dem Datenträger ist ein Oszillator vorgesehen, der von der Energiequelle über einen Schalter wahlweise betreibbar ist und der im Betrieb die Mittel im Datenträger für die drahtlose Verbindung speist, und wobei die feste Station Mittel zum Empfang von hochfrequenter Energie vom Datenträger enthält.

Aufgabe der Erfindung ist es, eine Datenaustauschanordnung der eingangs genannten Art anzugeben, die weniger Energie in der festen Station verbraucht und die für verschiedene Anwendungsfälle flexibel einsetzbar ist.

Diese Aufgabe wird erfindungsgemäß dadurch gelöst, daß in dem Datenträger ein Oszillator vorgesehen ist, der von der Energiequelle über einen Schalter wahlweise betreibbar ist und der im Betrieb die Mittel im Datenträger für die drahtlose Verbindung speist, und daß die feste Station Mittel zum Empfang von hochfrequenter Energie vom Datenträger enthält, um in der festen Station das Aussenden von hochfrequenter Energie zu starten, daß der Datenträger Detektionsmittel aufweist, welche die vom Datenträger empfangene Leistung detektiert und anschließend ein Abschalten des Oszillators im Datenträger auslöst, worauf der Datenträger passiv mittels der von der festen Station ausgestrahlten hochfrequenten Energie arbeite.

Erfindungsgemäß werden also weder der Datenträger noch die feste Station ständig betrieben, sondern der Datenträger kann vorzugsweise durch einen handbetätigten Schalter aktiv betrieben werden, wodurch die feste Station ihrerseits aktiv wird und ein hochfrequentes elektromagnetisches Feld aussendet, durch das der Datenträger auch mit Energie versorgt wird und seinen aktiven Betrieb schnell beenden kann. Dadurch wird die Energiequelle im Datenträger nur sehr kurz und nur bei Bedarf belastet, und auch in der festen Station wird nur dann Energie verbraucht, wenn tatsächlich ein Datenaustausch mit einem Datenträger benötigt wird. Ferner kann durch die Tatsache, daß im aktiven Betrieb des Datenträgers die Mittel für die drahtlose Verbindung durch einen Oszillator gespeist werden, die Schaltung des Datenträgers im übrigen genauso aufgebaut sein wie die eines nur passiv betriebenen Datenträgers, wodurch eine wirtschaftlichere Verwendung einer solchen Schaltung möglich ist.

Ein Oszillator besteht stets aus einem aktiven Element und einem oder mehreren frequenzbestimmenden Elementen. Bei einer Datenaustauschanordnung entsprechend einer aus der DE 32 42 551 C2 bekannten Art, bei der die Mittel für die drahtlose Verbindung wenigstens ein Spulenpaar umfassen, von dem die eine Spule in der festen Station und die andere Spule im Datenträger angeordnet ist und einen Teil eines Schwingkreises bildet, ist es nach einer Ausgestaltung der Erfindung zweckmäßig, daß dieser Schwingkreis frequenzbestimmender Teil des Oszillators ist. Auf diese Weise ist für den Oszillator nur ein aktives Element zusätzlich erforderlich, wodurch ein äußerst einfacher Aufbau bzw. nur eine sehr geringe Ergänzung des bekannten passiven Datenträgers erforderlich ist.

Die Energiequelle kann auf verschiedene Weise realisiert werden, beispielsweise als Solarzelle oder als Batterie wie bei dem eingangs beschriebenen bekannten Datenaustauschsystem. Da der tragbare Datenträger jedoch möglichst klein sein soll und somit nur eine Energiequelle mit geringer räumlicher Ausdehnung möglich ist, ist die in dieser Energiequelle enthaltene bzw. daraus lieferbare elektrische Energie begrenzt. Um dennoch eine möglichst lange und zuverlässige Benutzung des Datenträgers zu ermöglichen, ist es nach einer Ausgestaltung der Erfindung zweckmäßig, daß die Energiequelle aufladbar ist. Da bei jedem einzelnen Benutzungsfall des Datenträgers die Energiequelle nur kurzzeitig belastet wird, ist eine Energiequelle sehr geringer Kapazität ausreichend, wenn eine häufige Aufladung leicht möglich ist.

Dies kann jedoch nicht in allen Anwendungsfällen garantiert werden, beispielsweise zur Verwendung bei einem Kraftfahrzeug zum Öffnen der Türen und zum Freigeben des Startens. Bei einer Datenaustauschanordnung, die wie das eingangs beschriebene bekannte System mit Mitteln im Datenträger versehen ist, die auf die empfangene hochfrequente Energie ansprechen zum Umschalten der Speiseanordnung auf das Erzeugen der Betriebsspannung aus der empfangenen Energie, ist es nach einer weiteren Ausgestaltung der Erfindung zweckmäßig, daß die Mittel zum Festellen der Leistung der hochfrequenten Energie eingerichtet sind, um bei Überschreiten eines Leistungswertes einem Speiseausgang zum Aufladen der Energiequelle die Betriebsspannung von der Speiseanordnung zuzuführen. Diese Ausführung ist besonders zweckmäßig, wenn die Energiequelle ein Akkumulator oder auch ein Kondensator ist. Wenn sichergestellt ist, daß bei der Benutzung des Datenträgers genügend häufig ein ausreichend geringer Abstand zwischen Datenträger und fester Station erreicht wird, wird die Energiequelle stets nachgeladen, so daß ein nahezu unbegrenzt häufig aktiver Betrieb des Datenträgers möglich ist.

Eine besonders einfache Möglichkeit zur Aufladung der Energiequelle ist nach einer weiteren Ausgestaltung der Erfindung dadurch gekennzeichnet, daß die Energiequelle über einen Umschalter wahlweise mit dem Oszillator oder mit dem Speiseausgang verbindbar ist. Zweckmäßig ist es weiterhin, daß der Umschalter von den Mitteln zum Feststellen der Leistung steuerbar ist. Dabei erfolgt dann eine automatische Umschaltung nicht nur von dem aktiven auf den passiven Betrieb des Datenträgers, sondern auch gleichzeitig auf den Ladebetrieb, ohne daß ein Benutzer der Datentaustauschanordnung hierfür eingreifen muß. Wenn der erste und der zweite Leistungswert unterschiedlich sind, kann der Umschalter eine Mittelstellung aufweisen, in der die Energiequelle weder mit dem Oszillator noch mit dem Speiseausgang verbunden ist. Im einfachsten Falle sind jedoch bei dieser Ausführung der erste und der zweite Leistungswert gleich, so daß für die Energiequelle bei eingeschaltetem Datenträger nur zwei Zustände möglich sind, nämlich Speisung des Oszillators oder Aufladung über die Energieversorgung.

Ausführungsbeispiele der Erfindung werden nachstehend anhand der Zeichnung näher erläutert. Es zeigen:
- Fig. 1: ein Blockschaltbild einer erfindungsgemäßen Datenaustauschanordnung mit Datenträger und fester Station,
- Fig. 2: eine Abwandlung eines Teils des Datenträgers.

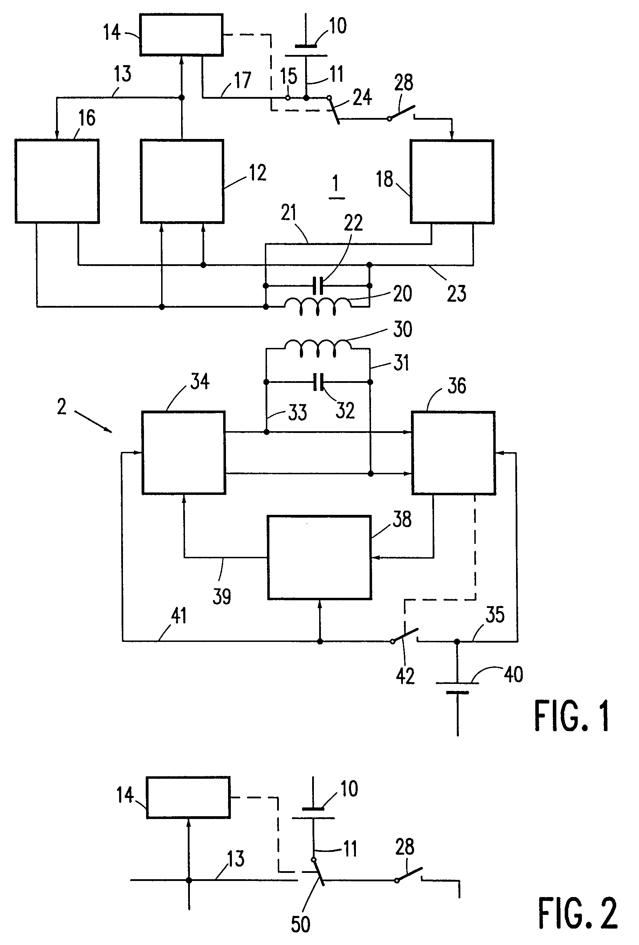

Die Fig. 1 zeigt das Blockschaltbild eines Datenträgers 1 und einer festen Station 2. Der Datenträger 1 enthält eine Spule 20 und einen Kondensator 22, die zusammen einen Schwingkreis bilden. Dieser Schwingkreis ist über die Leitungen 21 und 23 mit einer Gleichrichterschaltung 12 verbunden, die aus der an dem Schwingkreis entstehenden Spannung, wenn die Spule 20 ein hochfrequentes Magnetfeld empfängt, wenigstens eine Gleichspannung auf einer Leitung 13 erzeugt, die die datenverarbeitende Schaltung 16 speist. Diese enthält wenigstens einen Speicher, häufig auch mehrere Speicher und einen Mikroprozessor, die hier der Übersichtlichkeit halber nicht einzeln angegeben sind. Die Schaltung 16 ist ebenfalls über die Leitungen 21 und 23 mit dem Schwingkreis 20, 22 verbunden und überträgt die auszusendenden Daten vorzugsweise dadurch, daß der Schwingkreis abhängig von dem binären Wert der Daten gedämpft wird.

Die feste Station 2 enthält ebenfalls einen Schwingkreis, der aus einer Spule 30 und einem Kondensator 32 besteht und der über die Leitungen 31 und 33 mit einem Oszillator 34 verbunden ist. Dieser Oszillator 34 ist für eine höhere Leistung ausgelegt und erhält seine Energieversorgung über eine Leitung 41 sowie auszusendende Daten über eine Leitung 39 von einer Verarbeitungsanordnung 38, üblicherweise einen Rechner, der ebenfalls über die Leitung 41 seine Energieversorgung erhält. Die über die Leitung 39 empfangenen Daten werden im Oszillator beispielsweise durch Frequenzmodulation oder Phasenmodulation dem Schwingkreis 30, 32 zugeführt.

Die Leitungen 31 und 33 vom Schwingkreis sind ferner mit einer Empfangsanordnung 36 verbunden, die die von dem Datenträger 1 aufmodulierten Daten detektiert und regeneriert und dem Rechner 38 zuführt.

Die bisher beschriebenen Elemente entsprechen einer üblichen Datenaustauschanordnung mit einem passiv betriebenen Datenträger 1, der also nur dann Daten zur festen Station 2 übertragen kann, wenn letztere ein hochfrequentes Magnetfeld aussendet und dieses mit genügender Stärke in der Spule 20 des Datenträgers 1 empfangen wird. Bei der Anordnung nach Fig. 1 ist nun zusätzlich eine Energiequelle 10 sowie ein Oszillator 18 vorgesehen, der ebenfalls mit den Leitungen 21 und 23 zum Schwingkreis 20, 22 verbunden ist. Wenn ein Benutzer des Datenträgers 1 einen Datenaustausch mit einer festen Station 2 beginnen will, die sich im Ruhezustand befindet und kein hochfrequentes Magnetfeld aussendet, wird im Datenträger 1 ein Schalter 28 geschlossen, so daß nunmehr der Oszillator 18 von der Energiequelle 10 über die Leitung 11 und den Schalter 24 gespeist wird und den Schwingkreis 20, 22, der einen bzw. den frequenzbestimmenden Teil des Oszillators 18 darstellt, zu Schwingungen anregt. Die dabei am Schwingkreis 20, 22 entstehende Spannung wird in der Gleichrichterschaltung 12 ebenso verarbeitet wie eine Spannung am Schwingkreis 20, 22, die durch ein hochfrequentes Magnetfeld von einer festen Station erzeugt wird. Damit wird auf der Leitung 13 eine Gleichspannung erzeugt, die die Schaltung 16 zur Abgabe von Daten anregt, die in üblicher Weise beispielsweise durch Bedämpfung des Schwingkreises 20, 22 auf die darin erzeugte Schwingung aufmoduliert wird.

In der festen Station 2 empfängt die Spule 30 das von dem Datenträger 1 ausgesandte Signal und erzeugt eine entsprechende Spannung auf den Leitungen 31 und 33, die von der Empfangsschaltung 36 ausgewertet wird, da diese ständig über die Leitung 35 von einer Energiequelle 40 in der festen Station in Betrieb gehalten wird. Eine derartige Empfangsschaltung benötigt üblicherweise nur eine sehr geringe elektrische Energie. Sobald die Empfangsschaltung 36 eine Signalspannung auf den Leitungen 31 und 33 detektiert, steuert sie einen Schalter 42 an, so daß nunmehr auch die Leitung 41 mit der Energiequelle 40 verbunden ist und der Rechner 38 und der Oszillator 34 eingeschaltet werden. Damit erzeugt die feste Station 2 nun ihrerseits aktiv ein hochfrequentes Magnetfeld, das von dem Datenträger 1 aufgenommen und der Gleichrichterschaltung 12 zugeführt wird. Wenn die vom Datenträger 1 aufgenommene hochfrequente Leistung ausreichend größer ist als die vom Oszillator 18 in dem Schwingkreis 20, 22 erzeugte Leistung, steigt beispielsweise die Spannung auf der Leitung 13 an. Eine von dieser Spannung ebenfalls gesteuerte Detektionsschaltung 14, die diesen Leistungsanstieg bzw. diese höhere, der Gleichrichterschaltung 12 zugeführte Leistung detektiert, steuert nun den Schalter 24 an und öffnet diesen, so daß der Oszillator 18 abgeschaltet wird. Nunmehr arbeitet der Datenträger 1 nur noch passiv mittels der von der festen Station 2 ausgestrahlten hochfrequenten Energie.

Die Gleichrichterschaltung 12 kann im übrigen auch eine Stabilisierungsschaltung oder Spannungsregelschaltung für die Spannung auf der Leitung 13 enthalten, und die Detektionsschaltung 14 kann auch von dem Stabilisierungs- oder Regelsignal der Gleichrichterschaltung 12 angesteuert werden.

Wenn die von dem Datenträger 1 in der Spule 20 empfangene hochfrequente Energie ausreichend groß ist, führt die Detektionsschaltung 14 über eine Leitung 17 die auf der Leitung 13 erzeugte Spannung oder eine davon abgeleitete Spannung einem Speiseausgang 15 zu, der über die Leitung 11 mit der Energiequelle 10 verbunden ist und diese nunmehr auflädt. Dadurch kann der Energieverlust in der Energiequelle 10 bei dem anfänglichen aktiven Betreiben des Datenträgers 1 leicht wieder ausgeglichen werden.

Bei der Schaltung nach Fig. 1 kann die Detektionsschaltung 14 auf zwei verschiedene Werte der empfangenen hochfrequenten Leistung reagieren, indem bei einem ersten Leistungswert der Schalter 24 geöffnet und bei einem zweiten, höheren Leistungswert der Speiseausgang 15 mit Spannung versorgt wird. Es ist jedoch auch möglich, die beiden Leistungswerte gleich zu wählen, so daß gleichzeitig der Schalter 24 geöffnet und der Speiseausgang 15 mit Spannung versorgt wird.

Die Fig. 2 zeigt eine etwas andere Ausführung der Umschaltung der Energiequelle 10 von Speisung des Oszillators 18 auf eine Aufladung, insbesondere wenn die Spannung auf der Leitung 13 mit der Spannung der Energiequelle 10 übereinstimmt. Dafür ist die Energiequelle 10 über die Leitung 11 mit einem Umschalter 50 verbunden, der von der Detektionsschaltung 14 angesteuert wird. Wenn eine ausreichende hochfrequente Leistung im Datenträger empfangen wird, steuert die Detektionsschaltung 14 den Umschalter 50 derart, daß die Leitung 11 der Energiequelle 10 nunmehr mit der Leitung 13 verbunden wird, so daß automatisch der Oszillator im Datenträger abgeschaltet und die Energiequelle 10 aufgeladen wird.

## Patentansprüche

1. Datenaustauschanordnung mit einer festen Station (2) und einem tragbaren Datenträger (1), die miteinander durch Mittel (20, 30) für eine drahtlose Verbindung zur Übertragung hochfrequenter Energie und Daten gekoppelt sind, wobei der Datenträger (1) wenigstens eine elektrische Schaltung (16) mit einer Speiseanordnung (12) zum Erzeugen der Betriebsspannung der Schaltung (16) aus der empfangenen hochfrequenten Energie oder aus einer Energiequelle enthält, dadurch gekennzeichnet, daß in dem Datenträger (1) ein Oszillator (18) vorgesehen ist, der von der Energiequelle (10) über einen Schalter (28) wahlweise betreibbar ist und der im Betrieb die Mittel (20) im Datenträger (1) für die drahtlose Verbindung speist, daß die feste Station (2) Mittel (36) zum Empfang von hochfrequenter Energie vom Datenträger (1) enthält, um in der festen Station (2) das Aussenden von hochfrequenter Energie zu starten, daß der Datenträger Detektionsmittel (14) aufweist, welche die vom Datenträger empfangene Leistung detektiert und anschließend ein Abschalten des Oszillators (18) im Datenträger auslöst, worauf der Datenträger passiv mittels der von der festen Station (2) ausgestrahlten hochfrequenten Energie arbeitet.

2. Datenaustauschanordnung nach Anspruch 1, bei der die Mittel für die drahtlose Verbindung wenigstens ein Spulenpaar (20, 30) umfassen, von dem die eine Spule (30) in der festen Station (2) und die andere Spule (20) im Datenträger (1) angeordnet ist und einen Teil eines Schwingkreises (20, 22) bildet,
dadurch gekennzeichnet, daß dieser Schwingkreis (20, 22) frequenzbestimmender Teil des Oszillators (18) ist.

3. Datenaustauschanordnung nach Anspruch 1 oder 2,
dadurch gekennzeichnet, daß die Energiequelle (10) eine Solarzelle ist.

4. Datenaustauschanordnung nach einem der Ansprüche 1 oder 2,
dadurch gekennzeichnet, daß die Energiequelle (10) aufladbar ist.

5. Datenaustauschanordnung nach Anspruch 4 mit Mitteln im Datenträger (1), die auf die empfangene hochfrequente Energie ansprechen zum Umschalten der Speiseanordnung (12) auf das Erzeugen der Betriebsspannung aus der empfangenen Energie,
dadurch gekennzeichnet, daß die Detektionsmittel (14) bei Überschreiten eines Leistungswertes einem Speiseausgang (15) zum Aufladen der Energiequelle (10) die Betriebsspannung von der Speiseanordnung (12) zuzuführen.

6. Datenaustauschanordnung nach Anspruch 5,
dadurch gekennzeichnet, daß die Energiequelle (10) über einen Umschalter (50) wahlweise mit dem Oszillator (18) oder mit dem Speiseausgang (15) verbindbar ist.

7. Datenaustauschanordnung nach Anspruch 6,
dadurch gekennzeichnet, daß der Umschalter (50) von den Mitteln (14) zum Feststellen der Leistung steuerbar ist.

## Claims

1. A data exchange system, including a fixed station (2) and a portable data carrier (1) which are coupled to one another by means (20, 30) for establishing a wireless connection for the transmission of high-frequency energy and data, the data carrier (1) including at least an electric circuit (16) with a supply device (12) for generating the operating voltage for the circuit (16) from the high-frequency energy received or from an energy source, characterized in that the data carrier (1) is provided with an oscillator (18) which can be operated as desired by the energy source (10), via a switch (28), and feeds the means (20) in the data carrier (1) for the wireless connection during operation, that the fixed station (2) includes means (36) for receiving high-frequency energy from the data carrier (1) in order to start the transmission of high-frequency energy in the fixed station (2), and that the data carrier includes detection means (14) which detect the power received by the data carrier and subsequently initiate the switching of the oscillator (18) in the data carrier, the data carrier then operating in the passive mode by means of the high-frequency energy transmitted by the fixed station (2).

2. A data exchange system as claimed in Claim 1, in which the means for the wireless connection include at least a pair of coils (20, 30), one coil (30) thereof being arranged in the fixed station (2) whereas the other coil (20) is arranged in the data carrier (1) and forms part of a resonant circuit (20, 22), characterized in that the resonant circuit (20, 22) constitutes a frequency-determining part of the oscillator (18).

3. A data exchange system as claimed in Claim 1 or 2, characterized in that the energy source (10) is a solar cell.

4. A data exchange system as claimed in one of the Claims 1 or 2, characterized in that the energy source (10) can be recharged.

5. A data exchange system as claimed in Claim 4, including means in the data carrier (1) which respond to the high-frequency energy received in order to switch over the supply device (12) to generating the operating voltage from the energy received, characterized in that the detection means (14) apply, when a power value is exceeded, the operating voltage from the supply device (12) to a supply output (15) for charging the energy source (10).

6. A data exchange system as claimed in Claim 5, characterized in that the energy source (10) can be connected as desired, via a switch (50), to the oscillator (18) or to the supply output (15).

7. A data exchange system as claimed in Claim 6, characterized in that the switch (50) can be controlled by the means (14) for detecting the power.

## Revendications

1. Dispositif d'échange de données avec une station fixe (2) et un support de données (1) portable qui sont couplés l'un à l'autre par des moyens (20, 30) pour une liaison sans fil en vue de la transmission de données et d'énergie à haute fréquence, le support de données (1) contenant au moins un circuit électrique (16) avec un dispositif d'alimentation (12) en vue de la production de la tension de fonctionnement du circuit (16) à partir de l'énergie à haute fréquence reçue ou à partir d'une source d'énergie, caractérisé en ce qu'un oscillateur (18) qui peut à volonté être actionné par la source d'énergie (10) par l'intermédiaire d'un commutateur (28) est prévu dans le support de données (1) et, en fonctionnement, alimente les moyens (20) dans le support de données (1) pour la liaison sans fil de telle sorte que la station fixe (2) contienne des moyens (36) en vue de la réception de l'énergie à haute fréquence par le support de données (1) pour commencer la transmission d'énergie à haute fréquence dans la station fixe (2), en ce que le support de données présente des moyens détecteurs (14) qui détectent la puissance reçue par le support de données et déclenchent ensuite une mise hors tension de l'oscillateur (18) dans le support de données, sur quoi le support de données travaille passivement à l'aide de l'énergie à haute fréquence diffusée par la station fixe (2).

2. Dispositif d'échange de données selon la revendication 1, les moyens pour la liaison sans fil comprenant au moins une paire de bobines (20, 30) par laquelle l'une des bobines est disposée dans la station fixe (2) et l'autre bobine (20) est disposée dans le support de données (1) et forme une partie d'un circuit oscillant (20, 22), caractérisé en ce que ce circuit oscillant (20, 22) est la partie déterminant la fréquence de l'oscillateur (18).

3. Dispositif d'échange de données selon l'une des revendications 1 ou 2, caractérisé en ce que la source d'énergie (10) est une cellule solaire.

4. Dispositif d'échange de données selon l'une des revendications 1 à 2, caractérisé en ce que la source d'énergie (10) est rechargeable.

5. Dispositif d'échange de données selon la revendication 4 avec des moyens dans le support de données (1) qui réagissent à l'énergie à haute fréquence reçue en vue de la commutation du dispositif d'alimentation (12) sur la production de la tension de fonctionnement à partir de l'énergie reçue, caractérisé en ce que les moyens détecteurs (14) amènent la tension de fonctionnement du dispositif d'alimentation (12) en cas de dépassement d'une valeur de puissance à une sortie d'alimentation (15) en vue du chargement de la source d'énergie (10).

6. Dispositif d'échange de données selon la revendication 5, caractérisé en ce que la source d'énergie (10) peut être reliée au choix avec l'oscillateur (18) ou avec la sortie d'alimentation (15) par l'intermédiaire d'un commutateur (50).

7. Dispositif d'échange de données selon la revendication 6, caractérisé en ce que le commutateur (50) peut être commandé par les moyens (14) en vue de la détermination de la puissance.
